# EUROPEAN PATENT APPLICATION

(11) **EP 2 241 194 A1**
(43) Date of publication of application: **20.10.2010**
(21) Application number: 07860174.7
(22) Date of filing: 26.12.2007
(51) Int. Cl.: A23L 1/238, A23L 1/10

(54) **PROCESS FOR PRODUCING SOY SAUCE USING GELATINIZED BROWN RICE AS STARCH MATERIAL**

(71) Applicant: Kikkoman Corporation, Chiba 278-8601 (JP)
(72) Inventor: TOBE, Katsutoshi, Noda-shi Chiba 278-8601 (JP); TANNO, Takeki, Noda-shi Chiba 278-8601 (JP); EGAWA, Isao, Noda-shi Chiba 278-8601 (JP)
(74) Representative: Keirstead, Tanis Evelyne
(86) International application number: PCT/JP2007/074945
(87) International publication number: WO 2009/081495

(57) **Abstract**

It is an object of the present invention to provide soy sauce **characterized by** a low turbidity in the raw soy sauce state, reduced formation of pasteurized sediment in the soy sauce pasteurization step, and a light color. The present invention relates to soy sauce produced by koji production, fermentation and aging with the use of a protein material and a starch material as starting materials, wherein the starch material is gelatinized brown rice having a moisture content of 1% (w/w) or less, a degree of gelatinization of 40% or more, and no burnt odor.

## Description

### Technical Field

The present invention relates to an improved process for producing soy sauce using gelatinized rice as a starch material. In particular, the present invention relates to a process for obtaining soy sauce that is characterized by low turbidity in the raw soy sauce state and reduced formation of pasteurized sediment in the soy sauce pasteurization step with the use of, as a starch material, gelatinized brown rice having a moisture content of 1% (w/w) or less, a degree of gelatinization of 40% or more, and no burnt odor.

### Background Art

In general, a protein material and a starch material are used as starting materials for traditional Japanese soy sauce. As a protein material, defatted soybeans or other soybeans are mainly used. In addition, as a starch material, wheat is mainly used. The composition ratio of a protein material and a starch material used as starting materials (by weight) is approximately 1:1. In addition, defatted soybeans are introduced into a steam cooking machine, followed by moistening with water (110 to 140 (w/w)%). Carefully selected soybeans are washed, introduced into a steam cooking machine, and immersed in water. Then, water is removed, followed by steaming with saturated water vapor at 1.0 to 3.0 kg/cm² (gauge pressure) for approximately 10 minutes to 1 hour (in a continuous steam cooking machine, for example, which is used by major manufacturers at present). The sufficiently steamed defatted soybeans or other soybeans are cooled by standing to approximately 35°C to 40°C (cooling). Then, finely selected roasted wheat grains that have been crushed into approximately 4 to 6 pieces and seed koji mold (*Aspergillus sojae, Aspergillus oryzae,* or *Aspergillus Tamarii*) are added thereto, followed by mixing. The resultant is introduced into a koji production chamber (an automatic-ventilation-type koji production apparatus, for example, which is used by major manufacturers). Koji production is carried out for 42 to 72 hours while the temperature is controlled. Then, koji is taken out from the koji chamber. Thereafter, the koji is introduced into a tank for a mixing step. Next, common salt is dissolved in fresh water. Salt water adjusted to an appropriate concentration is mixed with koji (the step being referred to as the "mixing" step) for preparation of moromi mash. The thus obtained moromi mash is subjected to fermentation and aging during intermittent agitation for approximately 6 months to 1 year. Aged moromi mash is introduced into filter fabric bags made of synthetic fibers and the thus prepared filter fabric bags are stacked and applied to a press machine for squeezing. Accordingly, clarified liquid (referred to as "raw soy sauce") can be obtained. A small amount of salt water is added to the obtained raw soy sauce such that components of the soy sauce are adjusted in accordance with product specifications. The resultant is pasteurized. Ethanol or a preservative is added thereto, followed by clarification and sediment removal. Acceptable soy sauce is introduced into a washed clean bottle, can, or the like, followed by tight sealing with a bottle crown cap, plug, or the like, and labeling. The thus obtained soy sauce (product) is shipped. This step of pasteurization is sometimes referred to as "the pasteurization step." In addition, soy sauce subjected to the pasteurization step is sometimes referred to as "pasteurized soy sauce."

As described above, soy sauce is a seasoning rich in a delicious taste (*umami*), which is produced with the use of soybeans and wheat as main starting materials and is mainly composed of amino acids. Meanwhile, soy sauce is very salty and has a dark color. Therefore, existing soy sauce products are disadvantageous in that they do not meet the desires of consumers, who have been awaiting soy sauce with a light color and a mild flavor in recent years.

Hitherto, in order to solve the above problems, a process for producing soy sauce with the use of gelatinized rice (referred to as rice obtained by heat denaturation such as bulking, steaming, and roasting of polished white rice, immature rice, dead rice, damaged rice, brown rice, disrupted polished rice, rice powder, white bran, etc.) as the starch material (starting material) instead of wheat (see Patent Document 1) has been known as an example of the above soy sauce production process. According to this process, soy sauce with a mild flavor, a delicious taste (*umami*), and light color can be obtained, which is advantageous.
Patent Document 1: JP Patent Publication (Kokai) No. 10-276716 A (1998)
Patent Document 2: JP Patent No. 3120155
Patent Document 3: JP Patent No. 2936502

### Disclosure of the Invention

### Problem to be Solved by the Invention

However, studies conducted by the present inventors have revealed that, in the case of the process for producing soy sauce with the use of gelatinized rice as a protein material (starting material) disclosed in Patent Document 1, there are problems in that the turbidity of raw soy sauce obtained and the amount of sediment formed in the pasteurization step are at least approximately twice as great as those resulting in the case of general soy sauce obtained by a general soy sauce production process with the use of wheat as a starch material (starting material). In addition, the term "pasteurized sediment" used herein sometimes refers to a sediment formed in the pasteurization step.

It is an object of the present invention to obtain soy sauce that is characterized by low turbidity in the raw soy sauce state and a reduced amount of pasteurized sediment formed in the soy sauce pasteurization step to such an extent that it can be comparable to conventional soy sauce, in spite of the use of gelatinized rice as a starch material (starting material) instead of wheat.

### Means for Solving Problem

The present inventors focused on brown rice having a bran layer covering the rice grain surface in order to obtain gelatinized rice that does not cause the above disadvantages in the above soy sauce production process with the use of gelatinized rice. They have found that gelatinized brown rice having a moisture content of 1% or less, a degree of gelatinization of 40% or more, and no burnt odor can be obtained by roasting such brown rice with a heat medium at a temperature of 190°C to 220°C for 120 to 180 seconds, and that the above object can be achieved with the use of such gelatinized rice as a starch material for soy sauce production. This has led to the completion of the present invention. The present invention has been completed based on the above findings and encompasses the following inventions.
(1) Soy sauce produced by koji production, fermentation and aging with the use of a protein material and a starch material as starting materials, wherein the starch material is gelatinized brown rice having a moisture content of 1% (w/w) or less, a degree of gelatinization of 40% or more, and no burnt odor.
(2) The soy sauce according to (1), wherein the gelatinized brown rice is prepared by roasting brown rice with a heat medium at a temperature of 190°C to 220°C for 120 to 180 seconds.
(3) A process for producing soy sauce, comprising koji production, fermentation and aging with the use of a protein material and a starch material as starting materials, wherein the starch material is gelatinized brown rice having a moisture content of 1% (w/w) or less, a degree of gelatinization of 40% or more, and no burnt odor.
(4) The process according to (3), wherein the gelatinized brown rice is prepared by roasting brown rice with a heat medium at a temperature of 190°C to 220°C for 120 to 180 seconds.
(5) Gelatinized brown rice for soy sauce production, which has a moisture content of 1% (w/w) or less, a degree of gelatinization of 40% or more, and no burnt odor.
(6) The gelatinized brown rice for soy sauce production according to (5), which is prepared by roasting brown rice with a heat medium at a temperature of 190°C to 220°C for 120 to 180 seconds.

### Effects of the Invention

According to the present invention, gelatinized brown rice having a moisture content of 1% (w/w) or less, a degree of gelatinization of 40% or more, and no burnt odor, which is appropriate for soy sauce production, can be readily obtained. In addition, although gelatinized rice is used in the present invention, soy sauce characterized by a low turbidity in the raw soy sauce state and reduced formation of pasteurized sediment in the soy sauce pasteurization step can be readily obtained.

Hereinafter, the above effects are described in detail.

In a general soy sauce production process, raw soy sauce obtained by pressing and filtration of a product that has been obtained by fermentation and aging of moromi mash is heated to 80°C or higher (referred to as "pasteurization") such that a final product (pasteurized soy sauce) is obtained. During such process, a large amount of sediment (pasteurized sediment) is formed. Therefore, in general, in order to obtain a commercial product, such sediment is removed by adding a protein coagulant such as persimmon tannin after the pasteurization step, and the resultant is further clarified by filtration via diatomaceous earth. Such pasteurized sediment is formed as a result of sedimentation of an enzyme protein (from koji mold (*Aspergillus oryzae*)) that is insolubilized due to heat coagulation. The sediment is very fine and highly viscous and thus the bulk sediment volume after sedimentation reaches approximately 10%. A certain amount of soy sauce can be collected by filtration via diatomaceous earth as described above. However, filtration performance is poor, and therefore a portion of the resulting soy sauce must be discarded, leading to a decrease in the final product yield. In addition, the filtration operation is complicated. Further, under present circumstances, it is difficult to discard diatomaceous earth used in a large amount for filtration as industrial waste (see Patent Document 2).

As described above, when sediment formation takes place during the pasteurization step, the following problems arise: a long time is required for clarification following the pasteurization step; the pasteurization efficiency decreases due to adherence of the sediment to a pasteurization apparatus; and the filtration performance decreases due to the presence of the fine sediment (see Patent Document 3).

Accordingly, a pasteurized sediment significantly influences soy sauce productivity and workability of soy sauce production. Therefore, the development of raw soy sauce that causes no or substantially no sediment formation during pasteurization has been awaited.

The present invention provides a process for producing soy sauce, which is characterized by low turbidity in the raw soy sauce state (comparable to the case of conventional soy sauce obtained with the use of wheat as a starch material) and a reduced amount of pasteurized sediment formed in the soy sauce pasteurization step (comparable to the case of the conventional soy sauce production process), even though gelatinized rice is used as a starch material (starting material) instead of wheat, and whereby innovative effects can be obtained.

### Best Mode for Carrying Out the Invention

Hereinafter, the present invention is described in detail.

In the present invention, the term "brown rice" refers to unpolished white rice. Unpolished white rice differs from polished white rice in that it has a bran layer on its grain surface. Examples of brown rice include generally available brown rice, disrupted brown rice, and brown rice regarded as immature rice or damaged rice. In addition, long-grain hard brown rice (e.g., brown rice produced in Thailand) may be used.

According to the present invention, it is very important to use brown rice. When polished white rice is used as a starch material (starting material), the turbidity of obtained raw soy sauce increases. In addition, the amount of sediment formed during pasteurization increases in the pasteurization step. Therefore, the object of the present invention cannot be achieved. Meanwhile, the use of brown rice is effective in that the turbidity of raw soy sauce obtained is low and the amount of sediment formed during pasteurization is greatly reduced in the soy sauce pasteurization step.

It is also very important to roast brown rice with a heat medium at a temperature of 190°C to 220°C for 120 to 180 seconds in the present invention. When brown rice is allowed to come into contact with a heat medium at a temperature of less than 190°C for heating, gelatinized brown rice with a degree of gelatinization of 40% or more cannot be obtained. Meanwhile, when it is allowed to come into contact with a heat medium at more than 220°C, brown rice takes on a burnt odor, which might result in the risk of deterioration of flavor of the final product. This is not preferable.

In addition, it is also important to carry out roasting under the above temperature conditions for 120 to 180 seconds. When the roasting time is less than 120 seconds, gelatinized brown rice with a degree of gelatinization of 40% or more cannot be obtained. Meanwhile, when the roasting time exceeds 180 seconds, brown rice takes on a burnt odor, which might result in the risk of deterioration of flavor of the final product. This is not preferable.

Examples of a heat medium that can be used in the present invention include heated sand, heated stone, flame air, dried hot air, and a frying pan. It is also possible to use, for example, a wheat roaster or a flow roaster, which is used for general soy sauce production.

As a result of roasting of brown rice with a heat medium at a temperature of 190°C to 220°C for 120 to 180 seconds as described above, gelatinized brown rice having a moisture content of 1% (w/w) or less, a degree of gelatinization of 40% or more, and no burnt odor can be obtained. The lower limit of the moisture content is not particularly limited. However, it is generally approximately 0.1%. When the degree of gelatinization of a starch material (starting material) is less than 40%, the amount of sediment increases during the pasteurization step, which is not preferable. The upper limit of the degree of gelatinization is not particularly limited. However, it is generally approximately 80%. Herein, the expression "having...no burnt odor" indicates that gelatinized brown rice has no or substantially no unpleasant odor in addition to a roasted smell. The soy sauce of the present invention is produced with the use of the above gelatinized brown rice having a moisture content of 1% (w/w) or less, a degree of gelatinization of 40% or more, and no burnt odor as a starch material (starting material) by carrying out koji production, fermentation and aging with the further use of a protein material (starting material).

In the present invention, the expression "koji production, fermentation and aging with the use of a protein material and a starch material as starting materials" refers to a process that typically includes the steps described below. However, the process is not particularly limited thereto as long as it is a general process for producing soy sauce.
(1) A step of obtaining shoyu koji by adding seed koji (*Aspergillus sojae, Aspergillus oryzae,* or *Aspergillus Tamarii*) to a mixture of a protein material and a starch material used as starting materials, mixing the resulting product, and propagating koji mold (referred to as a koji production step).
(2) A step of obtaining soy sauce moromi mash by mixing the shoyu koji obtained in the above step (1) with salt water (referred to as a mixing step).
(3) A step of carrying out fermentation and aging of the soy sauce moromi mash obtained in the above step (2).
(4) A step of obtaining a clarified liquid (i.e., raw soy sauce) by pressing and filtration of a fermented and aged product obtained from soy sauce moromi mash obtained in the above step (3).
(5) A step of obtaining pasteurized soy sauce by pasteurizing raw soy sauce obtained in the above step (4) (referred to as a pasteurization step).
(6) A step of removing a pasteurized sediment formed in the pasteurization step.

A protein material used as a starting material and a thermal denaturation process used in the present invention are not particularly limited as long as they are used in a general process for producing soy sauce. Examples of such protein material include defatted soybeans and other soybeans. Examples of a thermal denaturation process include general steaming. Specifically, steaming of defatted soybeans can be carried out by moistening defatted soybeans with water (110 to 140 (w/w)%) in a steam cooking machine (a continuous steam cooking machine, for example, which is used by major manufacturers at present), followed by steaming with saturated water vapor at 1.0 to 3.0 kg/cm² (gauge pressure) for approximately 10 minutes to 1 hour. Steaming of soybeans can be carried out by carefully selecting soybeans, washing the soybeans, introducing the soybeans into a steam cooking machine, immersing the soybeans in water, removing water, and carrying out steaming with the use of saturated water vapor under the above conditions.

In addition, for gelatinized brown rice that is a starch material used as a starting material in the present invention, it is preferable to use gelatinized brown rice that has been crushed into approximately 4 to 6 pieces.

The composition ratio of a protein material and a starch material used as starting materials is arbitrarily determined. However, in terms of the weight ratio, it is preferably 20:80 to 80:20 and more preferably 30:70 to 70:30.

In a koji production process, it is preferable to carry out culture in a koji production chamber at a koji production temperature of 25°C to 35°C for 42 to 72 hours by blowing air adjusted to a temperature of 25°C to 30°C and a humidity of 95% to 100%. (The thus obtained koji is referred to as "shoyu koji.") In the mixing step, shoyu koji is introduced into a tank for the mixing step. Then, salt water (with a common salt concentration of, for example 20% to 25%) obtained by dissolving common salt in fresh water and adjusting the concentration to an appropriate level is introduced to the tank for the mixing step such that the volume of salt water is 1.0 to 4.0 times greater than the bulk volume of the starting materials before starting material processing. (This process is referred to as "mixing"). Thus, moromi mash is prepared. The thus prepared moromi mash is directly subjected to or mixed with soy-sauce lactic acid bacterium (*Pediococcus halophilus*) or soy-sauce yeast (*Zygosaccharomyces rouxii*) during or at the beginning of mixing according to need and then subjected to fermentation and aging including intermittent agitation at 15°C to 30°C for approximately 6 months to 1 year. Fermented and aged moromi mash is introduced into filter fabric bags made of synthetic fibers and the thus prepared filter fabric bags are stacked and applied to a press machine for squeezing. Thus, clarified liquid (referred to as "raw soy sauce") can be obtained. A small amount of salt water is added to the obtained raw soy sauce such that components of the soy sauce are adjusted in accordance with product specifications. The resultant is pasteurized at 80°C to 85°C for 30 to 60 minutes. Ethanol or a preservative is added thereto, followed by clarification for 4 to 7 days and sediment removal. The upper clear portion of the resultant is collected such that pasteurized soy sauce is obtained. The quality of this pasteurized soy sauce is examined and acceptable soy sauce is introduced into a washed clean bottle, can, or the like, followed by tight sealing with a bottle crown cap, plug, or the like, and labeling. The thus obtained soy sauce (product) is shipped.

Hereinafter, the present invention is more specifically described with reference to the following Examples.

### Examples

### [Example 1]

### (Example of production of the gelatinized brown rice of the present invention)

Commercially available brown rice for cooking was directly roasted without being polished under the conditions shown in table 1. In table 1, conditions of heating with hot air at a temperature of 190°C to 220°C for 120 to 180 seconds fall within the scope of the present invention. The other conditions fall within the scope of the Comparative Examples. Accordingly, gelatinized brown rice samples of the present invention and those of the Comparative Examples were obtained. For each sample of gelatinized brown rice, the degree of gelatinization and the moisture content were determined as shown in tables 1 and 2, respectively.

In addition, a flow roasting apparatus (type: FBDR-5-53D; Osaka Gas Engineering Co., Ltd.) was used for roasting.

Further, the degree of gelatinization was determined according to "*Shoyu no Kagaku to Gijutsu* (Science and Technology of Soy Sauce) (the Brewing Society of Japan).

The moisture content was determined according to the analysis process based on the soy sauce test procedures (Soy Sauce Information Center).

Table 1 shows the relationship between the roasting conditions and the degree of gelatinization of brown rice.

Table 2 shows the relationship between the roasting conditions and the moisture content of brown rice.

**[Table 1]**

| (Relationship between the roasting conditions and the degree of gelatinization of brown rice) | | | | | |
|---|---|---|---|---|---|
| Roasting | Roasting time (seconds) | | | | |
| temperature (°C) | 90 | 120 | 150 | 180 | 200 |
| 160 | 16.1 (×) | 16.0 (×) | 16.0 (×) | 16.0 (×) | 16.0 (×) |
| 180 | 18.1 (×) | 22.3 (×) | 26.3 (×) | 28.8 (×) | 28.5 (×) |
| 190 | 17.6 (×) | 40.4 (○) | 41.5 (○) | 43.5 (○) | 43.0 ( 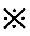 ) |
| 200 | 20.4 (×) | 40.4 (○) | 44.2 (○) | 46.5 (○) | 44.6 ( 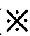 ) |
| 220 | 30.5 (×) | 43.0 (○) | 46.3 (○) | 45.3 (○) | 45.2 ( 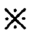 ) |
| 240 | 32.0 ( 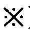 ) | 44.0 ( 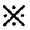 ) | 46.0 ( 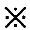 ) | 46.9 ( 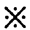 ) | 46.5 ( 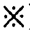 ) |
| Degree of gelatinization: unit (%) | | | | | |
| Symbol (×): Inappropriate as starch material (starting material) for soy sauce production; (○): Appropriate as starch material (starting material) for soy sauce production; ( 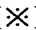 ): Inappropriate as starch material (starting material) for soy sauce production due to burnt odor | | | | | |

**[Table 2]**

| (Relationship between the roasting conditions and the moisture content of brown rice) | | | | | |
|---|---|---|---|---|---|
| Roasting | Roasting time (seconds) | | | | |
| temperature (°C) | 90 | 120 | 150 | 180 | 200 |
| 160 | 3.1 | 2.0 | 2.0 | 2.0 | 1.8 |
| 180 | 2.4 | 1.2 | 1.3 | 1.3 | 1.3 |
| 190 | 0.8 | 0.8 | 0.6 | 0.5 | 0.5 |
| 200 | 0.4 | 0.4 | 0.4 | 0.4 | 0.4 |
| 220 | 0.4 | 0.3 | 0.4 | 0.3 | 0.3 |
| 240 | 0.4 | 0.3 | 0.4 | 0.3 | 0.3 |

| | | | | | |
|---|---|---|---|---|---|
| Moisture content: unit (%) | | | | | |

Based on the results shown in table 1, it is understood that gelatinized brown rice with a degree of gelatinization of 40% or more cannot be obtained when brown rice is roasted at a temperature of less than 190°C (e.g., 180°C) while in contact with hot air. Meanwhile, it is understood that brown rice takes on a burnt odor as a result of coming into contact with hot air at more than 220°C (e.g., 240°C).

In addition, it is understood that gelatinized brown rice with a degree of gelatinization of 40% or more cannot be obtained when brown rice is roasted for less than 120 seconds (e.g., 90 seconds). Meanwhile, it is understood that brown rice has a burnt odor when heated for more than 180 seconds.

On the other hand, it is understood that gelatinized brown rice with a degree of gelatinization of 40% or more can be obtained when brown rice is roasted with hot air at a temperature of 190°C to 220°C for 120 to 180 seconds.

In addition, based on the results shown in tables 1 and 2, it is understood that gelatinized brown rice with a moisture content of 1% (w/w) or less and a degree of gelatinization of 40% or more can be obtained when roasting is carried out in a heat medium at a temperature of 190°C to 220°C for 120 to 180 seconds.

### (Comparative Example 1)

For comparison, different gelatinized polished white rice samples were obtained in the same manner as that of the process for producing gelatinized rice used in Example 1 except that polished white rice (rice polishing yield: approximately 90%) for cooking was used instead of brown rice for cooking. The degree of gelatinization and the moisture content of each gelatinized polished white rice sample were determined as in Example 1. The results are shown in tables 3 and 4, respectively.

Table 3 shows the relationship between the roasting conditions and the degree of gelatinization of polished white rice.

Table 4 shows the relationship between the roasting conditions and the moisture content of polished white rice.

**[Table 3]**

| (Relationship between the roasting conditions and the degree of gelatinization of polished white rice) | | | | | |
|---|---|---|---|---|---|
| Roasting | Roasting time (seconds) | | | | |
| temperature (°C) | 90 | 120 | 150 | 180 | 200 |
| 160 | 14.0 (×) | 16.0 (×) | 16.4 (×) | 16.5 (×) | 16.0 (×) |
| 180 | 16.0 (×) | 18.5 (×) | 18.0 (×) | 18.2 (×) | 17.4 (×) |
| 190 | 16.0 (×) | 18.0 (×) | 18.4 (×) | 19.0 (×) | 18.0 ( 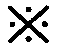 ) |
| 200 | 18.4 (×) | 19.2 (×) | 20.0 (×) | 20.0 (×) | 19.2 ( 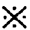 ) |
| 220 | 18.0 ( 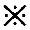 ) | 18.0 ( 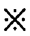 ) | 18.3 ( 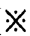 ) | 18.0 ( 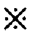 ) | 19.5 ( 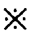 ) |
| 240 | 19.0 ( 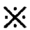 ) | 19.2 ( 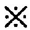 ) | 19.0 ( 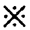 ) | 19.0 ( 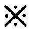 ) | 19.3 ( 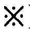 ) |
| Degree of gelatinization: unit (%) | | | | | |
| Symbol (×): Inappropriate as starch material (starting material) for soy sauce production; ( 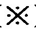 ): Inappropriate as starch material (starting material) for soy sauce production due to burnt odor | | | | | |

**[Table 4]**

| (Relationship between the roasting conditions and the moisture content of polished white rice) | | | | | |
|---|---|---|---|---|---|
| Roasting | Roasting time (seconds) | | | | |
| temperature (°C) | 90 | 120 | 150 | 180 | 200 |
| 160 | 0.4 | 0.4 | 0.4 | 0.4 | 0.4 |
| 180 | 0.4 | 0.4 | 0.4 | 0.4 | 0.4 |
| 190 | 0.4 | 0.4 | 0.4 | 0.4 | 0.4 |
| 200 | 0.4 | 0.4 | 0.4 | 0.4 | 0.4 |
| 220 | 0.4 | 0.4 | 0.4 | 0.4 | 0.4 |
| 240 | 0.3 | 0.3 | 0.3 | 0.3 | 0.3 |

| | | | | | |
|---|---|---|---|---|---|
| Moisture content: unit (%) | | | | | |

Based on the results shown in table 3, it is understood that degree of gelatinization of polished white rice is 20% or less in each category and falls far below the target level of 40% with any combination of roasting temperatures of 160°C to 240°C and roasting time periods of 90 to 200 seconds. In addition, when the temperature is not less than 220°C, bitter tastes are perceived due to charring. Therefore, it is understood that polished white rice is inappropriate as gelatinized rice for brewing.

In addition, based on the results shown in table 4, it is understood that the moisture content of gelatinized polished white rice obtained with any combination of roasting temperatures of 160°C to 240°C and roasting time periods of 90 to 200 seconds is 1% or less.

### [Example 2]

### (Example of soy sauce production with the use of gelatinized brown rice)

Brown rice for cooking was subjected to flow roasting at a temperature of 200°C for 150 seconds such that gelatinized brown rice was obtained. The obtained rice was crushed in a manner such that the crushed grain size (approximately 4 to 6 pieces from one grain) became equivalent to that of starch material used as a starting material (roasted wheat) obtained by a general soy sauce production process. Thus, crushed gelatinized brown rice was obtained. Meanwhile, soybeans that had been immersed in water overnight and then removed from water were steamed under pressure with saturated water vapor (1.8 kg/cm² (gauge pressure)) for 20 minutes. Thus, steamed soybeans were obtained. The above crushed gelatinized brown rice and the steamed soybeans were uniformly mixed such that the starting material weight composition ratio thereof became 35:65. The resultant was inoculated with seed koji mold, followed by koji production at a humidity of 97% and a temperature of 30°C for 42 hours. Accordingly, shoyu koji was obtained. Next, the obtained shoyu koji was mixed with salt water with a common salt concentration of 24% in a volume 1.2 times greater than the bulk volume of the starting materials before starting material processing and subjected to fermentation and aging at 15°C to 30°C for 6 months, followed by pressing. Thus, raw soy sauce was obtained.

### (Comparative Example)

### (Soy sauce production process with the use of gelatinized polished white rice)

Polished white rice for cooking (rice polishing yield: approximately 95%) was subjected to flow roasting at a temperature of 200°C for 150 seconds such that gelatinized polished white rice was obtained.

The obtained gelatinized polished white rice was processed in the same manner as that of the soy sauce production process used in Example 2 above. Thus, raw soy sauce for the Comparative Example was obtained.

### (Control Example)

### (Soy sauce production process with the use of roasted gelatinized wheat)

Wheat was subjected to flow roasting at a temperature of 200°C for 150 seconds such that gelatinized wheat was obtained.

The obtained gelatinized wheat was processed in the same manner as that of the soy sauce production process used in Example 2 above. Thus, raw soy sauce for the Control Example was obtained.

### (Pasteurization test)

The turbidity was determined for the three different samples of raw soy sauce obtained in Example 2, the Comparative Example, and the Control Example, respectively. In addition, the three different samples of raw soy sauce were each pasteurized at 80°C for 60 minutes and allowed to stand still for 4 days, followed by sediment removal. Then, the proportion of the pasteurized sediment volume with respect to the total volume was determined for each sample.

Table 5 shows the relationship between starch material (starting material) type and raw soy sauce turbidity and the relationship between starch material (starting material) type and the proportion of pasteurized sediment.

The turbidity was determined with a turbidity meter (CORONA Electric Co., Ltd.).

The proportion of the pasteurized sediment was expressed as the proportion of the volume of the sediment layer of soy sauce determined by macroscopic observation with respect to total volume (1 liter), provided that soy sauce had been collected immediately after pasteurization in a volume of 1 liter in a 1-liter measuring cylinder and allowed to stand still for 4 days.

**[Table 5]**

| Starch material (starting material) type | Turbidity of raw soy sauce (ppm) | Proportion of pasteurized sediment (v/v%) |
|---|---|---|
| Wheat (Control Example) | 80 | 10 |
| Brown rice (Example 2) | 78 | 10 |
| Polished white rice (Comparative Example ) | 205 | 25 |

Based on the results shown in table 5, in the case of the raw soy sauce obtained with the use of gelatinized brown rice (Example 2), the turbidity was 78 ppm and the proportion of pasteurized sediment was 10 (v/v%). Regarding comparison with conventional soy sauce (Control Example) obtained with the use of roasted wheat, both values were found to be as low as those in the Control Example. Meanwhile, in the case of the raw soy sauce obtained with the use of gelatinized polished white rice (Comparative Example ), the turbidity was 205 ppm and the proportion of pasteurized sediment was 25 (v/v%). Regarding comparison with conventional soy sauce (Control Example), both values were found to be at least twice as great as those in the Control Example.

Next, the three different samples of raw soy sauce obtained in Example 2, Comparative Example, and Control Example, respectively, were subjected to component analysis. The analysis process was determined according to the soy sauce test procedures (the Japan Soy Sauce Technology Center). Table 6 shows soy sauce component analysis values.

**[Table 6]**

| | Wheat (Control Example) | Brown rice (Example 2) | Polished white rice (Comparative Example ) |
|---|---|---|---|
| Total nitrogen (%) | 1.90 | 1.90 | 1.89 |
| Common salt (%) | 16.9 | 16.9 | 17.0 |
| Reducing sugar (%) | 4.29 | 4.34 | 4.39 |
| pH | 4.90 | 4.98 | 5.01 |
| Chromaticity | 20 | 28 | 28 |

Based on the results shown in table 6, it is understood that the raw soy sauce obtained with the use of gelatinized brown rice (Example 2) is high-quality soy sauce. This is because the total nitrogen content, the common salt content, the reducing sugar content, and pH of the raw soy sauce are substantially equivalent to those of conventional raw soy sauce obtained with the use of roasted wheat (Control Example). In addition, it is understood that the raw soy sauce of the present invention has a chromaticity of 28, indicating that it has a very light color compared with the control sample, which has a chromaticity of 20. Therefore, soy sauce obtained by the present invention has been found to meet the desires of consumers who have been awaiting soy sauce with light color in recent years.

## Claims

1. Soy sauce produced by koji production, fermentation and aging with the use of a protein material and a starch material as starting materials, wherein the starch material is gelatinized brown rice having a moisture content of 1% (w/w) or less, a degree of gelatinization of 40% or more, and no burnt odor.

2. The soy sauce according to claim 1, wherein the gelatinized brown rice is prepared by roasting brown rice with a heat medium at a temperature of 190°C to 220°C for 120 to 180 seconds.

3. A process for producing soy sauce, comprising koji production, fermentation and aging with the use of a protein material and a starch material as starting materials, wherein the starch material is gelatinized brown rice having a moisture content of 1% (w/w) or less, a degree of gelatinization of 40% or more, and no burnt odor.

4. The process according to claim 3, wherein the gelatinized brown rice is prepared by roasting brown rice with a heat medium at a temperature of 190°C to 220°C for 120 to 180 seconds.

5. Gelatinized brown rice for soy sauce production, which has a moisture content of 1% (w/w) or less, a degree of gelatinization of 40% or more, and no burnt odor.

6. The gelatinized brown rice for soy sauce production according to claim 5, which is prepared by roasting brown rice with a heat medium at a temperature of 190°C to 220°C for 120 to 180 seconds.
